## Europäisches Patentamt

## European Patent Office

## Office européen des brevets

(11) Publication number: **0 355 982**
**A2**

(12) # EUROPEAN PATENT APPLICATION

(21) Application number: **89307219.9**

(22) Date of filing: **17.07.89**

(51) Int. Cl.⁴ **B29C 59/16 , C08J 7/00 , //B29K31/00,B29L7/00**

(30) Priority: **20.07.88 US 222071**

(43) Date of publication of application:
**28.02.90 Bulletin 90/09**

(84) Designated Contracting States:
**DE FR GB IT NL SE**

(71) Applicant: **MINNESOTA MINING AND MANUFACTURING COMPANY**
**3M Center, P.O. Box 33427**
**St. Paul Minnesota 55133-3427(US)**

(72) Inventor: **Bhateja, Sudershan K.**
**c/o Minnesota Mining and Manufacturing Comp.**
**St. Paul Minnesota 55144-1000(US)**

(74) Representative: **Baillie, Iain Cameron et al**
**c/o Ladas & Parry Isartorplatz 5**
**D-8000 München 2(DE)**

(54) **Polymeric films having oxygen barrier properties.**

(57) A hydrolyzed ethylene-vinyl acetate copolymer film having low oxygen permeability is provided. The film is irradiated with ionizing radiation in an inert atmosphere at a dosage sufficient to provide a free radical concentration such that the film has an oxygen permeability of substantially zero cc-mil/m²-day-atm.

EP 0 355 982 A2

## POLYMERIC FILMS HAVING OXYGEN BARRIER PROPERTIES

Background of the Invention

Field of the Invention

This invention relates to polymeric films having excellent oxygen barrier properties and to a method of making such films.

Description of Related Art

Polyvinyl alcohols and hydrolyzed copolymers of polyvinyl alcohol and ethylene vinyl acetate (EVA) are well known to have low gas transmission rates and thus are useful in packaging applications because the main cause of spoilage of packaged materials is due to the oxidative process. The art has many examples of films using these materials as the oxygen barrier layer in multi-layer films. Other layers of such composite films are for such various purposes as improvements in water permeability, heat sealability, abuse resistance, flexibility and the like.

U.S. Patent No. 4,684,573 (Mueller et al.) provides an oxygen barrier composite film useful over a wide range of humidity conditions which combines ethylene vinyl alcohol copolymer and vinylidene chloride copolymer as separate components of the film.

U.S. Patent No. 4,610,914 (Newsome) discloses a multi-layered shrink film with oxygen barrier properties, wherein one of the layers is an ethylene vinyl alcohol copolymer blended with a thermoplastic polymer.

U.S. Patent No. 4,352,702 (Bornstein) discloses a thermoplastic receptacle prepared from a multi-layer film having olefin outer layers and an interior layer of hydrolyzed ethylene-vinyl acetate copolymer. The receptacle is irradiated to increase the high temperature strength of its seals.

U.S. Patent No. 4,469,742 (Oberle et al.) discloses a film having a first or sealing layer of a non-lipophilic polymeric material, a second or shrink layer of an ethylene homopolymer or copolymer, a third or adhesive layer of a chemically modified polyethylene being irradiatively cross-linkable and having functional groups with a relatively strong affinity for the following barrier layer, a fourth or barrier layer of a hydrolyzed ethylene vinyl acetate copolymer, a fifth or adhesive layer, and a sixth or abuse layer. All of the layers of the film are irradiatively cross-linked to increase the resistance of the film layers to delamination. The oxygen permeability of this film is considered to be sufficient when the rate is below 70 cc/m²/mil thickness/24 hrs./atms.

U.S. Patent No. 4,734,327 (Vicik) discloses an irradiated three-layer heat shrinkable film with a core layer of ethylene vinyl alcohol and nylon as an oxygen barrier with the outer layers of ethylene-vinyl acetate and a blend of ethylene-vinyl acetate and a linear low density polyethylene. The core layer is reported as providing an oxygen transmission rate below about 90 cc/m2/mil thickness/24 hours/Atm.

U.S. Patent No. 4,064,296 (Bornstein) discloses a heat shrinkable multi-layer packaging film having a layer of a hydrolyzed ethylene vinyl acetate copolymer which is preferably coextrued between two other polymeric layers, at least one of which is cross-linkable by irradiation. Oxygen transmission rates of the film of less than 2 cc/m², 24 hrs.,atm. are reported as not being uncommon.

U.S. Patent No. 4,839,235 (Shah) discloses a coextruded multiple layer oriented film having a core layer comprising an ethylene vinyl alcohol copolymer, two intermediate adhesive layers, and two outer layers comprising a polymeric material selected from the group consisting of ethylene butyl acrylate copolymer, and blends comprising at least 10% of said ethylene butyl acrylate copolymer blended with ethylene alpha-olefin copolymers. The film can be crosslinked by irradiation. A preferred embodiment of the multilayer film is reported to exhibit high oxygen barrier especially useful in food packaging applications.

Japanese Patent Publication 50/69162 discloses an ethylene vinyl alcohol copolymer composition for coextrusion laminates of polyethylene or ethylene vinyl acetate copolymers. The composition comprises 10 to 50 weight percent polyethylene or ethylene vinyl acetate copolymer added to 90 to 50 weight percent ethylene vinyl alcohol copolymer. Mention is made that the films so-produced have low oxygen permeabilities, but no data is reported.

British Patent Application GB 2,090,191 A discloses multiple layer heat sealable sheet materials having a heat seal layer which is a blend of an ethylene vinyl alcohol copolymer and a normally heat sealable

2

polymer such as ionomers, ethylene acrylic acid copolymer, ethylene methacrylic acid copolymer, ethylene vinyl acetate, and low density polyethylene for use as packaging films with low oxygen permeabilities.

Japanese Patent Publication 62/167047 discloses a transparent, laminated plastic film produced by applying 4 to 30 Mrad electron beam radiation to polyvinyl alcohol film and laminating a transparent plastic film with excellent vapor barrier properties onto at least one side of the resin film. The polyvinyl alcohol is obtained by saponification treating polyvinyl acetate, or ethylene vinyl acetate copolymers. Desirably, the polyvinyl alcohol film contains at least 50 mol percent polyvinyl alcohol.

## Brief Description of the Invention

The present invention, in one aspect, provides a film comprising hydrolyzed ethylene-vinyl acetate copolymer, said film being irradiated with ionizing radiation in an inert atmosphere at a dosage sufficient to provide a free radical concentration such that the film has an oxygen permeability of substantially zero cc-mil/m²-day-atm. Generally, a film of only hydrolyzed ethylene-vinyl acetate copolymer having a free radical concentration of at least about $10^{16}$-$10^{17}$ spins/g will have an oxygen permeability of substantially zero cc-mil/m²-day-atm.

Surprisingly, it has been found that irradiating a film comprising hydrolyzed ethylene-vinyl acetate copolymer with sufficient ionizing radiation in an inert atmosphere to achieve a sufficient free radical concentration provides a film having an oxygen permeability of substantially zero cc-mil/m²-day-atm for as long a period of time as the free radical concentration is maintained.

The irradiated films of the invention also surprisingly have reduced moisture sensitivity and permeability.

The present invention, in another aspect, provides a film comprising at least about 75 weight percent hydrolyzed ethylene-vinyl acetate copolymer, said copolymer containing at least about 50 mol percent vinyl alcohol, and up to about 25 weight percent ethylene-vinyl acetate copolymer, said film being irradiated with ionizing radiation in an inert atmosphere at a dosage of at least about 2 Mrads radiation having an oxygen permeability of less than about 0.2 cc-mil/m²-day-atm.

The present invention, in another aspect, provides a film comprising at least about 50 weight percent hydrolyzed ethylene-vinyl acetate copolymer, said copolymer containing at least about 65 mol percent vinyl alcohol, and up to about 50 weight percent ethylene-vinyl acetate copolymer, said film being irradiated with sufficient ionizing radiation in an inert atmosphere to achieve a free radical concentration such that the film has an oxygen permeability of substantially zero cc-mil/m²-day-atm.

The present invention, in a further aspect, provides a method of making a film having low oxygen permeability comprising irradiating a film comprising hydrolyzed ethylene-vinyl acetate copolymer with ionizing radiation in an inert atmosphere at a dosage sufficient to provide a free radical concentration such that the film has an oxygen permeability of substantially zero cc-mil/m²-day-atm.

The present invention, in another aspect, provides a method of making a film having low oxygen permeability comprising irradiating a film comprising at least 75 weight percent hydrolyzed ethylene-vinyl acetate copolymer, said copolymer containing at least about 50 mol percent vinyl alcohol, and up to about 25 weight percent ethylene-vinyl acetate polymer with ionizing radiation in an inert atmosphere at a dosage of at least about 2 Mrads radiation to provide a film having an oxygen permeability of less than about 0.2 cc-mil/m²-day-atm.

The present invention, in another aspect, provides a method of making a film having low oxygen permeability comprising irradiating a film comprising at least about 50 weight percent hydrolyzed ethylene-vinyl acetate copolymer, said copolymer containing at least about 65 mol percent vinyl alcohol, and up to about 50 weight percent ethylene-vinyl acetate copolymer with sufficient ionizing radiation in an inert atmosphere to provide a film having a free radical concentration to provide an oxygen permeability of substantially zero cc-mil/m²-day-atm.

## Detailed Description of the Invention

The hydrolyzed ethylene-vinyl acetate copolymer used in preparing the films of the present invention preferably contains at least about 50 mol percent, more preferably at least about 65 mol percent, vinyl alcohol. When the copolymer contains less than about 50 mol percent vinyl alcohol, a reduction in oxygen

3

barrier effects may result.

Hydrolyzed ethylene-vinyl acetate copolymers having higher glass transition temperatures are preferred. Copolymers having higher glass transition temperatures are generally those having higher molecular weights as well as greater amounts of vinyl alcohol content. Irradiated films prepared from copolymers having higher glass transition temperatures generally exhibit low oxygen permeability for longer periods of time.

Examples of commercially available hydrolyzed ethylene-vinyl acetate copolymer resins useful in the present invention include resins available from Eval Company of America under the tradename EvalTM. Hydrolyzed ethylene-vinyl acetate copolymer resins are also available from Kuraray Co. and Nippon Goshei. Examples of commercially available hydrolyzed ethylene-vinyl acetate copolymer films useful in the present invention include EvalTM EF-E, EvalTM EF-F, and EvalTM EF-XL, available from Eval Company of America.

The hydrolyzed ethylene-vinyl acetate copolymer film useful in the invention must be capable of attaining a sufficient free radical concentration to provide the desired oxygen permeability. Generally, a film of only hydrolyzed ethylene-vinyl acetate copolymer having a free radical concentration of at least about $10^{16}$-$10^{17}$ spins/g will have an oxygen permeability of substantially zero cc-mil/m²-day-atm. The use of excessive amounts of anti-oxidants or other additives to the resin or melt from which the film is made may hinder the formation of the free radicals and such use is preferably minimized.

The films of the invention can be prepared using conventional techniques such as, for example, blowing, extruding, and casting. It is generally preferable that the film be quenched slowly after extrusion, e.g., using moderate to high chill roll temperatures, to allow the film an enhanced opportunity to crystallize. The films of the invention can also be made by coating the hydrolyzed ethylene-vinyl acetate copolymer or the blend of the hydrolyzed ethylene-vinyl acetate copolymer and the ethylene-vinly acetate copolymer onto a substrate such as a film of, for example, polypropylene.

Films prepared from hydrolyzed ethylene-vinyl acetate can be irradiated by ionizing radiation in an inert atmosphere to achieve an oxygen permeability of about zero cc-mil/m²-day-atm, i.e., less than 0.01 cc-mil/m²-day-atm.

The film may contain up to about 25 weight percent ethylene-vinyl acetate copolymer blended with the hydrolyzed ethylene-vinyl acetate copolymer when the hydrolyzed ethylene-vinyl acetate copolymer contains at least about 50 mol percent vinyl alcohol. The film may contain up to about 50 weight percent ethylene-vinyl acetate copolymer blended with the hydrolyzed ethylene-vinyl acetate copolymer when the hydrolyzed ethylene-vinyl acetate copolymer contains at least about 65 mol percent vinyl alcohol. Irradiated films prepared from blends of hydrolyzed ethylene-vinyl acetate copolymer and ethylene-vinyl acetate copolymer have significantly reduced oxygen permeability.

Examples of commercially available ethylene-vinyl actate copolymer resins useful in the present invention include ElvaxTM resins available from Dupont Co., UltratheneTM resins available from USI Chemicals, and EscoreneTM resins available from Exxon Chemicals.

Sources of ionizing radiation suitable for use in the present invention include electron beam and gamma ray radiation sources. Generally, electron beam radiation is preferred. Dosages of radiation required to effect the desired reduction in oxygen permeability are preferably in the range of about 1 to 40 Mrads, more preferably in the range of about 2 to 20 Mrads, with increasing radiation levels producing a monotonic increase in duration of the reduction in oxygen permeability. Irradiation is carried out in an inert atmosphere, i.e., non-oxygen-containing atmosphere, such as, for example, a nitrogen or argon atmosphere.

The thickness of the films of the invention can be in the range of 0.01 to 20 or more mils, although preferable films have a thickness in the range of 0.2 to 5 mils, more preferably 0.5 to 3 mils. The thickness of the film is limited by the desired tensile properties and the ability to achieve the desired amount of free radicals. With thicker films, it may be desirable to irradiate the film from each side using a high voltage electron beam source of radiation.

The films of the invention can be coextruded with or laminated to other films such as, for example, films of polypropylene, polyethylene, polyester, polyamide, polyvinylidene chloride, polyvinyl chloride, and polytetrafluoroethylene. When multi-layer films are to be irradiated the film must be sufficiently thin as to permit penetration of the irradiation.

The films of the invention can be laminated to other films either before or after irradiation. Where lamination is carried out after irradiation, adhesives are preferably used. Lamination methods requiring the use of elevated temperatures are generally not preferred when lamination is carried out after irradiation as exposure to high temperature may destroy the reduced oxygen permeability achieved through irradiation.

The films of the invention can be annealed prior to irradiation at temperatures up to about 30°C below the melting temperature, if desired. However, annealing after irradiation is generally not preferred as exposure to high temperatures required for annealing may destroy the reduced oxygen permeability achieved through irradiation.

In the following examples, all the polymer film samples were exposed to a 200 KV electron beam in an ESI unit (CB-250/30/20 Electro Curtain System) at room temperature in a nitrogen atmosphere.

Oxygen permeability of each film was measured at 25°C and 0% relative humidity unless otherwise indicated using a Mocon Dual Channel Permeability Tester (Pax-Tran II) manufactured by Modern Controls, Inc., Minneapolis, Minn., according to ASTM Test Method D-3985. Film specimens were mounted in the tester within 15 minutes of irradiation. The test chamber was purged with nitrogen for about 36 hours to displace background oxygen and a first oxygen permeability measurement was performed. Oxygen was then flowed through the test chamber at a rate of 10 cc/min for about 36 hours and a second oxygen permeability measurement was performed, the difference between the first and second measurements being the permeability.

The irradiated films were then stored at ambient conditions and further oxygen permeability measurements performed periodically on the same film sample within each example as a function of storage time. These measurements were continued until the permeability was found to reach an equilibrium value, which was usually the oxygen permeability for the unirradiated film.

Concentration of entrapped free-radicals was measured on the irradiated films by electron spin resonance (ESR) using a Varian Model 4502 Spectrometer with a 9-inch magnet operating in the X-band. Immediately after irradiation, the film specimens were immersed and maintained in liquid nitrogen until making the ESR measurements. All measurements were made at ambient conditions.

Examples 1-3 and Comparative Example C1

In Example 1, a 1.5 mil thick film was made using EVAL™ EP-E105 resin (a hydrolyzed ethylene-vinyl acetate copolymer having a vinyl alcohol content of 56 mol percent available from Eval Company of America) using the blown film process. This film was exposed to 2 Mrad electron beam radiation. In Example 2, a film was prepared as in Example 1, but was exposed to 5 Mrad electron beam radiation. In Example 3, a film was prepared as in Example 1, but was exposed to 10 Mrad electron beam radiation. In Comparative Example 1, a film was prepared as in Example 1, but was not irradiated.

The oxygen permeability and the free radical content of these films was periodically measured and the resulting data are shown in Tables 1 and 2.

Table 1

| Example | Dose (Mrad) | Oxygen permeability (cc-mil/m²-day-atm) after aging time (days) | | | | | |
|---|---|---|---|---|---|---|---|
| | | 3 | 6 | 16 | 43 | 84 | 143 |
| C1 | 0 | 2.1 | 2.2 | -- | -- | 2.4 | 2.2 |
| 1 | 2 | 0 | 0 | 0.13 | 1.8 | 1.7 | -- |
| 2 | 5 | 0 | 0 | 0 | 1 | 1.9 | -- |
| 3 | 10 | 0 | 0 | 0 | 0.17 | 2.3 | 2.3 |

Table 2

| Aging time (days) | | Free-radical concentration (spins/g) | | |
|---|---|---|---|---|
| | Example: | 1 | 2 | 3 |
| | Dose: | 2 Mrad | 5 Mrad | 10 Mrad |
| 0 | | $5.4 \times 10^{17}$ | $8.6 \times 10^{17}$ | $1.2 \times 10^{18}$ |
| 0.08 | | $4.9 \times 10^{17}$ | $7.5 \times 10^{17}$ | $1.1 \times 10^{18}$ |
| 0.88 | | $3.7 \times 10^{17}$ | $5.5 \times 10^{17}$ | $8.5 \times 10^{17}$ |
| 1.84 | | $3.2 \times 10^{17}$ | $4.9 \times 10^{17}$ | $7.5 \times 10^{17}$ |
| 2.84 | | $3.0 \times 10^{17}$ | $4.5 \times 10^{17}$ | $6.9 \times 10^{17}$ |
| 7.86 | | $2.0 \times 10^{17}$ | $3.0 \times 10^{17}$ | $4.8 \times 10^{17}$ |
| 12.9 | | $1.5 \times 10^{17}$ | $2.3 \times 10^{17}$ | $3.8 \times 10^{17}$ |
| 19.8 | | $1.0 \times 10^{17}$ | $1.6 \times 10^{17}$ | $2.8 \times 10^{17}$ |
| 64 | | $4.2 \times 10^{15}$ | $3.4 \times 10^{15}$ | $8.8 \times 10^{16}$ |
| 84.7 | | -- | $2.0 \times 10^{15}$ | $4.9 \times 10^{16}$ |

As can be seen from the data in Table 1, upon irradiation, the oxygen permeability drops to immeasurably low levels with the measurement equipment available, the sensitivity of which the manufacturer states to be 0.01 cc-mil/m²-day-atm. For all irradiated films, the oxygen permeability stays immeasurably low for a certain length of time, then starts to rise and finally plateaus out to a value close to that of the unirradiated film. The length of time that the oxygen permeability stays immeasurably low is a strong function of the radiation dose and increases monotonically with increasing dose.

As can be seen from Table 2, the free radical concentration increases monotonically with increasing radiation dose and at any given dose, decays exponentially with time, especially at higher times. There appears to be a direct correlation between the onset of oxygen permeability and the disappearance of the free radicals entrapped in the film. It is believed that the irradiated polymer film acts as an oxygen scavenger and is essentially impermeable to oxygen as long as the free radical concentration in the film is above a critical value, which appears to be about $10^{16}$-$10^{17}$ spins/g for these films. It appears that when the free radical concentration drops below the critical value, oxygen molecules are able to permeate through the film and the film behaves as an unirradiated film.

Examples 4-8 and Comparative Example C2

In Examples 4-8, films were prepared as in Example 1, but were exposed to radiation levels of 0.1 Mrad, 1 Mrad, 4 Mrads, 10 Mrads, and 20 Mrads, respectively. In Comparative Example C2, a film was prepared as in Example 1, but was not irradiated. Each film was tested for moisture vapor transmission rate at 25°C using a PermatranTM W-6 unit, manufactured by Modern Controls, Inc. The results are shown in Table 3.

TABLE 3

| Example | Radiation dose (Mrad) | Average moisture vapor transmission (g-mil/m²-day-atm) |
|---|---|---|
| C2 | 0 | 19.48 |
| 4 | 0.1 | 19.80 |
| 5 | 1 | 19.88 |
| 6 | 4 | 19.72 |
| 7 | 10 | 16.36 |
| 8 | 20 | 16.53 |

As can be seen from the data in Table 3, the moisture vapor transmission of the films is significantly reduced upon radiation, especially for films exposed to the higher dosages of radiation, i.e., 10 Mrads and 20 Mrads. This is a significant advantage for the irradiated films of the present invention, especially since unirradiated films of hydrolyzed ethylene-vinyl acetate are notoriously poor with respect to their moisture sensitivity.

## Example 9 and Comparative Example C3

Films were prepared as in Example 1, except that the film of Example 9 was exposed to 10 Mrads electron beam radiation and the film of Comparative Example C3 was exposed to no radiation. The films were tested for oxygen permeability at a relative humidity of 90-95%. The results are shown in Table 4.

TABLE 4

| Example | Aging time (Days) | Oxygen permeability (cc-mil/m$^2$-day-atm) |
|---------|-------------------|------------------------------------------|
| C3 | 1 | 2.58 |
| 9a | 0.083 | 0.125 |
| 9b | 0.875 | 0.113 |
| 9c | 1.094 | 0.150 |
| 9d | 5.896 | 0.137 |

As can be seen from the data in Table 4, the irradiated film of Example 9 has significantly reduced oxygen permeability, even under high humidity conditions.

## Example 10 and Comparative Example C4

In Example 10, a film of hydrolyzed ethylene-vinyl acetate copolymer obtained from Eval Company of America, Lisle, IL., EvalTM EF-E (an unoriented film 0.82 mil thick, 56 mol % vinyl alcohol), was exposed to electron beam radiation of 10 Mrad. The oxygen permeability of the film was tested periodically. For Comparative Examples C4, the oxygen permeability of an unirradiated sample of the film was determined. The results are set forth in Table 5. The free radical concentration of the irradiated film was also determined periodically. The results are set forth in Table 6.

TABLE 5

| Example | Aging time (Days) | Oxygen permeability (cc-mil/m$^2$-day-atm) |
|---------|-------------------|------------------------------------------|
| C4 | 0 | 1.87 |
| 10a | 3.8 | 0 |
| 10b | 17.8 | 2.03 |
| 10c | 19.8 | 1.78 |
| 10d | 32.9 | 1.97 |

TABLE 6

| Example | Aging time (days) | Free-radical concentration (spins/g) |
|---------|-------------------|--------------------------------------|
| 10a′ | 0 | $1.2 \times 10^{18}$ |
| 10b′ | 0.08 | $1.1 \times 10^{18}$ |
| 10c′ | 0.88 | $8.2 \times 10^{18}$ |
| 10d′ | 2.17 | $6.0 \times 10^{17}$ |
| 10e′ | 6.03 | $3.2 \times 10^{17}$ |
| 10f′ | 13.03 | $8.5 \times 10^{16}$ |
| 10g′ | 18.88 | $5.5 \times 10^{16}$ |

As can be seen from the data in Table 5, the oxygen permeability drops down to zero cc-mil/m²-day-atm (immeasurably low in the Mocon unit) upon exposure to radiation. The oxygen permeability of the films stays zero cc-mil/m²-day-atm for a storage time of at least 3.8 days at ambient conditions, before rising back to the permeability value of the unirradiated film. Correspondingly, as can be seen from the data in Table 6, the concentration of entrapped free radicals in the films decreases as a function of time. Again, there appears to be a correlation between zero cc-mil/m²-day-atm oxygen permeability and the entrapped free radical concentration in the film. As long as the concentration of the entrapped free radicals in the film stays above a critical value, oxygen is unable to permeate through the film. From a correlation of the permeability data and the ESR data, the critical free radical concentration appears to be about $10^{16}$-$10^{17}$ spins/g.

Example 11 and Comparative Example C5

In Example 11, a film of hydrolyzed ethylene-vinyl acetate copolymer obtained from Eval Company of America, Lisle, IL., Eval™ EF-F (an unoriented film 0.58 mil thick, 68 mol % vinyl alcohol), was exposed to electron beam radiation of 10 Mrad. The oxygen permeability of the film was tested periodically. For Comparative Examples C5, the oxygen permeability of an unirradiated sample of the film was determined. The results are set forth in Table 7. The free radical concentration of the irradiated film was also determined periodically. The results are set forth in Table 8.

TABLE 7

| Example | Aging time (Days) | Oxygen permeability (cc-mil/m²-day-atm) |
|---------|-------------------|------------------------------------------|
| C5 | 0 | 0.21 |
| 11a | 3.8 | 0 |
| 11b | 86 | 0 |
| 11c | 182 | 0 |
| 11d | 213 | 0.13 |
| 11e | 252 | 0.20 |
| 11f | 258 | 0.27 |

TABLE 8

| Example | Aging time (days) | Free-radical concentration (spins/g) |
|---------|-------------------|--------------------------------------|
| 11a' | 0 | $1.7 \times 10^{18}$ |
| 11b' | 0.08 | $1.6 \times 10^{18}$ |
| 11c' | 0.88 | $1.3 \times 10^{18}$ |
| 11d' | 1.88 | $1.2 \times 10^{18}$ |
| 11e' | 6.88 | $8.5 \times 10^{17}$ |
| 11f' | 18.88 | $5.5 \times 10^{17}$ |
| 11g' | 63.04 | $2.9 \times 10^{17}$ |
| 11h' | 84.04 | $2.4 \times 10^{17}$ |
| 11i' | 149.04 | $1.2 \times 10^{17}$ |
| 11j' | 192.04 | $5.5 \times 10^{15}$ |

As can be seen from the data in Table 7, the oxygen permeability drops down to zero cc-mil/m²-day-atm (immeasurably low in the Mocon unit) upon exposure to radiation. The oxygen permeability of the film stays zero cc-mil/m²-day-atm for a storage time of at least 182 days at ambient conditions, before gradually rising back to the permeability value of the unirradiated film.

Correspondingly, as can be seen from the data in Table 8, the concentration of entrapped free radicals in the films decreases as a function of time. Again, as the free radical concentration approaches about $10^{16}$-$10^{17}$ spins/g, the oxygen permeability begins to rise above zero cc-mil/m²-day-atm. From a comparison of the data in Tables 5 and 7, it can be seen that the film of Example 11 retained oxygen impermeability for a much longer time than did the film of Example 10. This is believed to be due to the greater amount of vinyl alcohol in the film of Example 11.

## Example 12 and Comparative Example C6

In Example 12, a film of hydrolyzed ethylene-vinyl acetate copolymer obtained from Eval Company of America, Lisle, IL., Eval™ EF-XL (an oriented film 0.59 mil thick, 68 mol % vinyl alcohol), was exposed to electron beam radiation of 10 Mrad. The oxygen permeability of the film was tested periodically. For Comparative Examples C6, the oxygen permeability of an unirradiated sample of the film was determined. The results are set forth in Table 9. The free radical concentration of the irradiated film was also determined periodically. The results are set forth in Table 10.

TABLE 9

| Example | Aging time (Days) | Oxygen permeability (cc-mil/m²-day-atm) |
|---------|-------------------|------------------------------------------|
| C6 | 2 | 0.27 |
| 12a | 2 | 0 |
| 12b | 77 | 0 |
| 12c | 157 | 0 |
| 12d | 181 | 0.16 |
| 12e | 190 | 0.26 |
| 12f | 195 | 0.31 |

TABLE 10

| Example | Aging time (days) | Free-radical concentration (spins/g) |
|---------|-------------------|--------------------------------------|
| 12a' | 0 | $1.5 \times 10^{18}$ |
| 12b' | 0.08 | $1.3 \times 10^{18}$ |
| 12c' | 0.88 | $1.1 \times 10^{18}$ |
| 12d' | 1.88 | $9.8 \times 10^{17}$ |
| 12e' | 6.88 | $7.1 \times 10^{17}$ |
| 12f' | 13.85 | $5.0 \times 10^{17}$ |
| 12g' | 58.04 | $2.5 \times 10^{17}$ |
| 12h' | 79.04 | $2.0 \times 10^{17}$ |
| 12i' | 144.04 | $8.2 \times 10^{16}$ |
| 12j' | 192.04 | $3.3 \times 10^{15}$ |

As can be seen from the data in Table 9, the oxygen permeability drops down to zero cc-mil/m²-day-atm (immeasurably low in the Mocon unit) upon exposure to radiation. The oxygen permeability of the film stays zero cc-mil/m²-day-atm for a storage time of at least 157 days at ambient conditions, before gradually rising back to the permeability value of the unirradiated film.

Correspondingly, as can be seen from the data in Table 10, the concentration of entrapped free radicals in the films decreases as a function of time. Again, as the free radical concentration approaches about $10^{16}$-$10^{17}$ spins/g, the oxygen permeability begins to rise above zero cc-mil/m²-day-atm. From a comparison of the data in Tables 5 and 9, it can be seen that the film of Example 12 retained oxygen impermeability for a much longer time than did the film of Example 10. This is again believed to be due to the greater amount of vinyl alcohol in the film of Example 12. From a comparison of the data in Tables 7 and 9, it can be seen that the oriented film of Example 12 had a slightly quicker loss of oxygen impermeability than did the unoriented film of Example 11.

Examples 13-15

In Examples 13-15, irradiated samples of film of Examples 10-12, respectively, were stored for a sufficient period of time that their oxygen permeability returned to that of unirradiated film and then re-exposed to 10 Mrads electron beam radiation. Each film again exhibited an oxygen permeability of zero cc-mil/m²-day-atm after re-irradiation. The oxygen permeability of the films of Example 14 (Eval™ EF-F) and Example 15 (Eval™ EF-XL) were monitored for oxygen permeability over a period of time. The film of Example 14 maintained zero oxygen permeability for 70 days, while the film of Example 15 maintained zero oxygen permeability for 67 days.

Examples 16-18

In Examples 16-18, irradiated samples of film of Examples 10-12, respectively, were annealed at 110° C for 2 hours in a forced air oven about one minute after being irradiated. ESR measurements indicated no free radical activity in any of the films, and the oxygen permeability through these annealed films, 1.74, 0.17, and 0.18 cc-mil/m²-day-atm, respectively, was somewhat below but close to that of the unirradiated and unannealed film.

Example 19

In Example 19, a sample of the Eval™ EF-E film was exposed to 20 Mrads electron beam radiation. The oxygen permeability and free radical concentration were determined periodically. The results are set forth in Tables 11 and 12.

TABLE 11

| Example | Aging time (Days) | Oxygen permeability (cc-mil/m²-day-atm) |
|---|---|---|
| 19a | 1.6 | 0 |
| 19b | 15 | 0 |
| 19c | 47 | 0 |
| 19d | 82 | 0.34 |
| 19e | 162 | 2.31 |
| 19f | 173 | 2.35 |

TABLE 12

| Example | Aging time (days) | Free-radical concentration (spins/g) |
|---|---|---|
| 19a' | 0 | $1.6 \times 10^{18}$ |
| 19b' | 0.08 | $1.4 \times 10^{18}$ |
| 19c' | 0.88 | $1.1 \times 10^{18}$ |
| 19d' | 1.85 | $9.9 \times 10^{17}$ |
| 19e' | 2.88 | $8.9 \times 10^{17}$ |
| 19f' | 5.88 | $7.1 \times 10^{17}$ |
| 19g' | 13.04 | $4.7 \times 10^{17}$ |
| 19h' | 19.92 | $3.1 \times 10^{17}$ |
| 19i' | 63.5 | $8.2 \times 10^{16}$ |
| 19j' | 84.3 | $3.5 \times 10^{16}$ |

Example 20

In Example 20, a sample of the Eval™ EF-F film was exposed to 20 Mrads electron beam radiation. The oxygen permeability and the free radical concentration were determined periodically. The results are set forth in Tables 13 and 14.

TABLE 13

| Example | Aging time (Days) | Oxygen permeability (cc-mil/m²-day-atm) |
|---|---|---|
| 20a | 1 | 0 |
| 20b | 58 | 0 |
| 20c | 184 | 0 |
| 20d | 200 | 0 |

TABLE 14

| Example | Aging time (days) | Free-radical concentration (spins/g) |
|---|---|---|
| 20a' | 0 | $1.9 \times 10^{18}$ |
| 20b' | 0.08 | $1.8 \times 10^{18}$ |
| 20c' | 0.88 | $1.6 \times 10^{18}$ |
| 20d' | 1.85 | $1.4 \times 10^{18}$ |
| 20e' | 6.88 | $1.0 \times 10^{18}$ |
| 20f' | 11.88 | $8.3 \times 10^{17}$ |
| 20g' | 18.87 | $6.2 \times 10^{17}$ |
| 20h' | 63.5 | $3.2 \times 10^{17}$ |
| 20i' | 84.3 | $2.6 \times 10^{17}$ |
| 20j' | 149.04 | $1.2 \times 10^{17}$ |
| 20k' | 192.04 | $5.7 \times 10^{15}$ |

Example 21

In Example 21, a sample of the Eval™ EF-XL film was exposed to 20 Mrads electron beam radiation. The oxygen permeability and free radical concentration were determined periodically. The results are set forth in Table 15 and 16.

TABLE 15

| Example | Aging time (Days) | Oxygen permeability (cc-mil/m²-day-atm) |
|---|---|---|
| 21a | 1.6 | 0 |
| 21b | 63 | 0 |
| 21c | 153 | 0 |
| 21d | 171 | 0.04 |
| 21e | 180 | 0.11 |
| 21f | 189 | 0.27 |

TABLE 16

| Example | Aging time (days) | Free-radical concentration (spins/g) |
|---|---|---|
| 21a' | 0 | $2.2 \times 10^{18}$ |
| 21b' | 0.08 | $1.9 \times 10^{18}$ |
| 21c' | 0.88 | $1.6 \times 10^{18}$ |
| 21d' | 1.85 | $1.4 \times 10^{18}$ |
| 21e' | 6.88 | $9.5 \times 10^{17}$ |
| 21f' | 13.85 | $6.7 \times 10^{17}$ |
| 21g' | 79.04 | $2.5 \times 10^{17}$ |
| 21h' | 144.04 | $9.3 \times 10^{16}$ |
| 21i' | 192.04 | $3.3 \times 10^{15}$ |

12

## Examples 22 and 23 and Comparative Examples C7 and C8

In Examples 22 and 23, micro-layer films with 45 alternating layers of polypropylene (Type PP-3014, available from Exxon Chemical Co.), Modic™ P-300F (maleic anhydride modified adhesive tie-layer available from Mitsubishi Chemical Co.) and Eval™ EP-E105 hydrolyzed ethylene-vinyl acetate copolymer were prepared using a multi-layer film die and the cast extrusion film making process. The thickness of each polypropylene layer was about 0.002 mm, of each Modic layer 0.001 mm, and of each hydrolyzed ethylene-vinyl acetate copolymer layer 0.002 mm. The film of Example 22 was cast on a chilled roll maintained at 63°C and the film of Example 23 was cast on a chilled roll maintained at 32°C. Each film was exposed to 10 Mrads electron beam radiation. In Comparative Examples C7 and C8, films were prepared as in Examples 22 and 23, respectively, but were not irradiated. Oxygen permeability and free radical concentration were determined periodically on the irradiated films. The oxygen permeability of the non-irradiated films was also determined. The results are set forth in Tables 17 and 18.

TABLE 17

| Aging time (days) | | Oxygen permeability (cc-mil/m$^2$-day-atm) | | | |
|---|---|---|---|---|---|
| | Example: | 22 | C7 | 23 | C8 |
| | Roll temp (°C): | 63 | 63 | 32 | 32 |
| 3 | | 0 | 4.75 | 0 | 6.65 |
| 6.8 | | 0 | -- | 2.2 | -- |
| 14 | | 0 | -- | 6.11 | -- |
| 16 | | 0 | -- | -- | -- |
| 25.7 | | 4.82 | -- | -- | -- |

TABLE 18

| Aging time (days) | | Free-radical concentration (spins/g) | |
|---|---|---|---|
| | Example: | 22 | 23 |
| | Roll temp (°C): | 63 | 32 |
| 0 | | $5.4 \times 10^{17}$ | $2.4 \times 10^{17}$ |
| 0.08 | | $4.8 \times 10^{17}$ | $2.1 \times 10^{17}$ |
| 0.17 | | $4.4 \times 10^{17}$ | $2.0 \times 10^{17}$ |
| 0.88 | | $3.4 \times 10^{17}$ | $1.6 \times 10^{17}$ |
| 2.15 | | $2.5 \times 10^{17}$ | $1.1 \times 10^{17}$ |
| 6.00 | | $1.4 \times 10^{17}$ | $5.6 \times 10^{16}$ |
| 13.00 | | $5.78 \times 10^{16}$ | $2.0 \times 10^{16}$ |

In addition to the above film samples, a set of control samples without the Modic tie layers were also extruded using each of the two different chill roll temperatures.

Qualitatively, both sets of film samples exhibit similar radiation-induced changes in oxygen permeability as with the single layer films of hydrolyzed ethylene-vinyl acetate polymer of the previous examples. In each case the oxygen permeability drops down to essentially zero cc-mil/m$^2$-day-atm immediately upon irradiation, stays zero cc-mil/m²-day-atm for a certain length of time before rising back to essentially the value for the unirradiated film. The chill roll temperature has a significant effect on the permeability response of both the unirradiated and the irradiated films. For the unirradiated samples, the oxygen permeability value is higher at the lower chill roll temperature, probably due to higher amorphous content and other differences in morphology. In addition, oxygen permeability upon irradiation stays immeasurably low for a shorter time period for the lower chill roll temperature films (approximately 3 days) than the higher chill roll temperature films (approximately 16 days). As can be seen from the data in Table 18, the free radical concentration in the 63°C chill roll sample is much higher than that in the 32°C sample, and therefore maintains the critical concentration for much longer times.

Examples 24-25 and Comparative Examples C9-C12

Blends of ethylene-vinyl acetate (EVA) copolymer (Elvax™ 660, available from E. I. Dupont de Nemours, Inc. and hydrolyzed ethylene-vinyl acetate (HEVA) copolymer (Eval™ EP-F104, 68 mol percent vinyl alcohol, available from Eval Company of America) were extruded into 2 mil thick films by the cast extrusion process using a chill roll temperature of 10°C at the weight percent ratios set forth in Table 19. The films were exposed to 10 Mrad electron beam radiation. The oxygen permeability of each film was measured as well as the oxygen permeability of the films non-irradiated. The results are set forth in Table 19.

TABLE 19

| Example | EVA/HEVA (wt %) | Dose (Mrad) | Oxygen permeability (cc-mil/m²-day-atm) |
|---------|-----------------|-------------|------------------------------------------|
| C9 | 100/0 | 0 | 16,200 |
| C10 | 100/0 | 10 | 11,920 |
| C11 | 50/50 | 0 | 0.79 |
| 24 | 50/50 | 10 | 0 |
| C12 | 25/75 | 0 | 0.2 |
| 25 | 25/75 | 10 | 0 |

From the data in Table 19, it is apparent that for the ethylene-vinyl acetate copolymer rich films, where ethylene-vinyl acetate copolymer forms the continuous phase and provides an easy path for oxygen diffusion, the measured permeability is high. As the content of hydrolyzed ethylene-vinyl acetate copolymer in the blends increases, a composition range is achieved when neither ethylene-vinyl acetate copolymer nor the hydrolyzed ethylene-vinyl acetate copolymer forms the continuous phase, and the blend samples provide a tortuous path for the oxygen permeant and the oxygen permeability is substantially lower. An example of such a blend is the 50/50 blend. When the hydrolyzed ethylene-vinyl acetate becomes the continuous phase, as in Comparative Examples C11 and C12, the oxygen permeability approaches that of EVOH alone. In addition, in the 50/50 and 25/75 blends of Examples 24 and 25, respectively, irradiation decreases oxygen permeability to zero cc-mil/m²-day-atm.

A sample of film of each of Examples 24 and 25 was aged for the periods of time set forth in Table 20 and the oxygen permeability of the film was measured. The results are set forth in Table 20.

14

TABLE 20

| Example | Days since Irradiation | Oxygen Permeability (cc-mil/m²-day-atm) |
|---|---|---|
| 24a | 3 | 0 |
| 24b | 7 | 0 |
| 24c | 16 | 0.8 |
| 25a | 4 | 0 |
| 25b | 12 | 0 |
| 25c | 16 | 0 |
| 25d | 36 | 0.06 |

Although irradiation lowers the oxygen permeability of 100% ethylene-vinyl acetate films (Comparative Example C10), the oxygen permeability value for these irradiated films is very high. As can be seen from the data in Tables 19 and 20, in the films made from 50/50 EVA/HEVA (Example 24) and 25/75 EVA/HEVA (Example 25) blends, however, irradiation lowers oxygen permeability to zero and upon aging at ambient conditions, subsequent to irradiation, oxygen impermeability is retained for significant periods of time, the shelf-life for oxygen impermeability increasing with increasing HEVA content.

The free radical concentrations were determined for the films of Examples 24 and 25 and Comparative Example C10 after various periods of aging with the results set forth in Tables 21, 22, and 23, respectively.

TABLE 21

| Aging Time (days) | Free Radical Concentration (spins/g) |
|---|---|
| 0 | $3.40 \times 10^{18}$ |
| 0.01 | $3.12 \times 10^{18}$ |
| 0.03 | $2.92 \times 10^{18}$ |
| 0.08 | $2.48 \times 10^{18}$ |
| 0.13 | $2.29 \times 10^{18}$ |
| 0.17 | $2.16 \times 10^{18}$ |
| 0.25 | $2.00 \times 10^{18}$ |
| 1.00 | $1.52 \times 10^{18}$ |
| 2.00 | $1.22 \times 10^{18}$ |
| 3.00 | $1.04 \times 10^{18}$ |
| 6.00 | $7.39 \times 10^{17}$ |
| 8.17 | $5.73 \times 10^{17}$ |
| 13.17 | $3.51 \times 10^{17}$ |
| 16.17 | $2.55 \times 10^{17}$ |
| 20.17 | $1.44 \times 10^{17}$ |
| 24.17 | $6.65 \times 10^{16}$ |

TABLE 22

| Aging Time (days) | Free Radical Concentration (spins/g) |
|---|---|
| 0.88 | $1.57 \times 10^{18}$ |
| 1.88 | $1.47 \times 10^{18}$ |
| 2.88 | $1.41 \times 10^{18}$ |
| 3.88 | $1.33 \times 10^{18}$ |
| 6.88 | $1.17 \times 10^{18}$ |
| 9.04 | $1.06 \times 10^{18}$ |
| 14.04 | $9.62 \times 10^{17}$ |
| 17.04 | $8.71 \times 10^{17}$ |
| 21.04 | $7.99 \times 10^{17}$ |
| 25.04 | $7.17 \times 10^{17}$ |

TABLE 23

| Aging Time (days) | Free Radical Concentration (spins/g) |
|---|---|
| 0 | $5.15 \times 10^{16}$ |
| 0.01 | $3.24 \times 10^{16}$ |
| 0.03 | $1.91 \times 10^{16}$ |
| 0.08· | $1.34 \times 10^{16}$ |
| 0.83 | $3.18 \times 10^{15}$ |
| 2.83 | Trace |

As can be seen from the data in Tables 21, 22, and 23, the free radical concentration for the 100% EVA film of Comparative Example C10 is low immediately after irradiation and the radicals decay relatively rapidly with time. As the HEVA content in the film is increased to 50% in Example 24 and 75% in Example 25, the free radical concentration in the film increases and the radicals last for much longer time periods.

Example 26 and Comparative Examples C13-C17

Blends of ethylene-vinyl acetate (EVA) copolymer (Elvax™ 660, available from E. I. Dupont de Nemours, Inc. and hydrolyzed ethylene-vinyl acetate (HEVA) copolymer (Eval™ EP-E105, available from Eval Company of America) were extruded into 2 mil thick films by the cast extrusion process using a chill roll temperature of 32°C at the weight percent ratios set forth in Table 24. The films were exposed to 10 Mrad electron beam radiation. The oxygen permeability of each film was measured as well as the oxygen permeability of the films non-irradiated. The result are set forth in Table 24.

TABLE 24

| EVA/HEVA | | Dose (Mrad) | Oxygen permeability ($cc$-$mil$/$m^2$-$day$-$atm$) |
|---|---|---|---|
| Example | (wt %) | | |
| C13 | 100/0 | 0 | 14,700 |
| C14 | 100/0 | 10 | 16,100 |
| C15 | 50/50 | 0 | 9.8 |
| C16 | 50/50 | 10 | 8.3 |
| C17 | 25/75 | 0 | 3.9 |
| 26 | 25/75 | 10 | 0.15 |

From the data in Table 24, it is apparent that for the ethylene-vinyl acetate copolymer rich films, where ethylene-vinyl acetate copolymer forms the continuous phase and provides an easy path for oxygen diffusion, the measured permeability is high. As the content of hydrolyzed ethylene-vinyl acetate copolymer in the blends increases, a composition range is achieved when neither ethylene-vinyl acetate copolymer nor the hydrolyzed ethylene-vinyl acetate copolymer forms the continuous phase, and the blend samples provide a tortuous path for the oxygen permeant and the oxygen permeability is substantially lower. An example of such a blend is the 50/50 blend. When the hydrolyzed ethylene-vinyl acetate becomes the continuous phase, as in Example 26 and Comparative Example C17, the oxygen permeability approaches that of EVOH alone.

Examples 27 and 28 and Comparative Examples C18 and C19

Multilayer films with 65 alternating layers of polypropylene (Type PP-3014, available from Exxon Chemical Co.), a maleic anhydride based tie layer (Admer™ QF551A, available from Mitsui Petrochemicals), and hydrolyzed ethylene-vinyl acetate (HEVA) copolymer (Eval™ F-101, available from Eval Company of America), were prepared using a cast extrusion film making process. The relative amounts of the materials were: polypropylene - 40 weight percent, tie layer 20 weight percent, and HEVA copolymer 40 weight percent. The total film thickness was 1.77 mils (0.045 mm) for Example 27 and 1.79 mils (0.045 mm) for Example 28. The film of Example 27 was cast using a chill roll temperature of 81°C, and the film of Example 28 using a chill roll temperature of 5°C. Each film was exposed to an electron beam radiation dose of 10 Mrads. Comparative Examples C18 and C19 were prepared as in Examples 27 and 28 respectively, but were not irradiated. Oxygen permeability and free radical concentrations were measured periodically on the irradiated films, and the resulting data are summarized in Tables 25 and 26.

TABLE 25

| Aging Time (Days) | | Oxygen Permeability ($cc$-$mil$/$m^2$-$day$-$atm$) | | | |
|---|---|---|---|---|---|
| | Example: | 27 | C18 | 28 | C19 |
| 3 | | 0 | 0.226 | 0 | 0.682 |
| 8 | | 0 | | 0 | |
| 10 | | 0 | | 0 | |
| 19 | | 0 | | 0.107 | |
| 21 | | 0 | | 0.165 | |
| 26 | | 0 | | 0.414 | |
| 30 | | 0 | | 0.430 | |
| 39 | | 0.035 | | 0.537 | |
| 47 | | 0.103 | | 0.501 | |
| 54 | | 0.195 | | 0.569 | |

17

TABLE 26

| Aging time (days) | | Free Radical Concentration (spins/g) | |
|---|---|---|---|
| | Example: | 27 | 28 |
| 0 | | $3.49 \times 10^{18}$ | $1.60 \times 10^{18}$ |
| 0.01 | | $3.28 \times 10^{18}$ | $1.59 \times 10^{18}$ |
| 0.03 | | $2.90 \times 10^{18}$ | $1.52 \times 10^{18}$ |
| 0.08 | | $2.79 \times 10^{18}$ | $1.43 \times 10^{18}$ |
| 0.13 | | $2.68 \times 10^{18}$ | $1.36 \times 10^{18}$ |
| 0.17 | | $2.54 \times 10^{18}$ | $1.32 \times 10^{18}$ |
| 0.21 | | $2.47 \times 10^{18}$ | $1.29 \times 10^{18}$ |
| 0.33 | | $2.29 \times 10^{18}$ | $1.19 \times 10^{18}$ |
| 1.33 | | $1.98 \times 10^{18}$ | $1.06 \times 10^{18}$ |
| 5.33 | | $1.48 \times 10^{18}$ | $7.49 \times 10^{17}$ |
| 8.33 | | $1.20 \times 10^{18}$ | $5.79 \times 10^{17}$ |
| 12.33 | | $1.03 \times 10^{18}$ | $4.43 \times 10^{17}$ |
| 16.33 | | $8.58 \times 10^{17}$ | $3.74 \times 10^{17}$ |
| 28.35 | | $5.56 \times 10^{17}$ | $1.06 \times 10^{17}$ |
| 35.35 | | $4.43 \times 10^{17}$ | $4.09 \times 10^{16}$ |
| 42.35 | | $3.66 \times 10^{17}$ | $2.11 \times 10^{16}$ |

As can be seen from the data in Tables 17 and 25, the 65-layer films of Examples 27 and 28 exhibit radiation induced changes in oxygen permeability similar to those described for the 45-layer films of Examples 22 and 23 made using Eval™ EP-E105 HEVA resin. For instance, in each case the oxygen permeability dropped down to essentially zero immediately upon irradiation, stayed zero for a certain length of time, and then started rising. Also, the oxygen permeability upon irradiation stayed immeasurably low for a shorter time period for the films made using a lower chill roll temperature. Correspondingly, as can be seen from the data in Tables 18 and 26, the free radical concentration in the films made using the higher chill roll temperature is much higher and maintains the critical concentration for much longer times.

Examples 29 and 30 and Comparative Examples C20 and C21

Multilayer films with 65 alternating layers of amorphous nylon (Selar™ PA3426, available from Du Pont), ethylene-vinyl acetate (EVA) (Plexar™ PX3667, available from Quantum Chemical Corporation) and hydrolyzed ethylene-vinyl acetate (HEVA) (Eval™ F-101, available from Eval Company of America) were prepared using the cast extrusion film making process. The relative amounts of the materials were: nylon - 30 weight percent, EVA - 30 weight percent, and HEVA 40 weight percent. The overall total film thickness was 1.53 mils (0.039 mm) for Example 29 and 1.56 mils (0.040 mm) for Example 30. The film of Example 29 was cast using a chill roll temperature of 63°C, and the film of Example 30 using a chill roll temperature of 7°C. Each film was exposed to an electron beam radiation dose of 10 Mrads. Films in Comparative Examples C20 and C21 were prepared as those in Examples 29 and 30, respectively, but were not irradiated. Oxygen permeability of the films, and free radical concentrations of the irradiated films were measured periodically. The resulting data are shown in Tables 27 and 28.

TABLE 27

| Aging time (days) | | Oxygen Permeability (cc-mil/m²-day-atm) | | | |
|---|---|---|---|---|---|
| | Example: | 29 | C20 | 30 | C21 |
| 3 | | 0 | 0.359 | 0 | 0.548 |
| 8 | | 0.01 | | 0 | |
| 10 | | 0.01 | | 0 | |
| 19 | | 0 | | 0 | |
| 21 | | 0 | | 0 | |
| 26 | | 0 | | 0 | |
| 30 | | 0 | | 0 | |
| 39 | | 0.02 | | 0.16 | |
| 47 | | 0 | | 0.31 | |
| 54 | | 0 | | 0.33 | |

TABLE 28

| Aging time (days) | | Free Radical Concentration (spins/g) | |
|---|---|---|---|
| | Example: | 29 | 30 |
| 0 | | $3.30 \times 10^{18}$ | $1.70 \times 10^{18}$ |
| 0.01 | | $3.16 \times 10^{18}$ | $1.64 \times 10^{18}$ |
| 0.03 | | $3.02 \times 10^{18}$ | $1.57 \times 10^{18}$ |
| 0.08 | | $2.80 \times 10^{18}$ | $1.45 \times 10^{18}$ |
| 0.13 | | $2.63 \times 10^{18}$ | $1.34 \times 10^{18}$ |
| 0.17 | | $2.45 \times 10^{18}$ | $1.30 \times 10^{18}$ |
| 0.21 | | $2.34 \times 10^{18}$ | $1.28 \times 10^{18}$ |
| 0.33 | | $2.20 \times 10^{18}$ | - |
| 0.46 | | $2.06 \times 10^{18}$ | $1.15 \times 10^{18}$ |
| 1.46 | | $1.77 \times 10^{18}$ | $1.03 \times 10^{18}$ |
| 5.46 | | $1.38 \times 10^{18}$ | $7.98 \times 10^{17}$ |
| 8.46 | | $1.12 \times 10^{18}$ | $6.51 \times 10^{17}$ |
| 12.46 | | $9.58 \times 10^{17}$ | $5.46 \times 10^{17}$ |
| 16.46 | | $8.62 \times 10^{17}$ | $4.41 \times 10^{17}$ |
| 28.46 | | $5.85 \times 10^{17}$ | $2.31 \times 10^{17}$ |
| 35.44 | | $5.04 \times 10^{17}$ | $1.47 \times 10^{17}$ |
| 42.44 | | $4.54 \times 10^{17}$ | $9.02 \times 10^{16}$ |

As can be seen from the data in Table 27, the films of Examples 29 and 30 exhibit an oxygen permeability of essentially zero immediately after irradiation and remain at essentially zero oxygen permeability for a period of time before starting to rise. As can be seen from the data in Table 28, at any given time after the initial irradiation, the free radical concentration is much higher in the film cast using the 63°C chill roll than in the film cast using the 7°C chill roll. Correspondingly, the essentially zero oxygen permeability was retained for longer times in the film prepared using the 63°C chill roll.

Example 31 and Comparative Example C22

A multilayer film having 65 alternating layers of nylon 66 (Nylon Type 1100, available from Celanese Corporation), ethylene-vinyl acetate (EVA) (Plexar™ PX3667, available from Quantum Chemical Corporation), and hydrolyzed ethylene-vinyl acetate (HEVA) (EvalTM F101, available from Eval Corporation of America) was prepared using the cast extrusion film making process. The relative amounts of the materials were: nylon 66 - 30 weight percent, EVA - 30 weight percent, and HEVA - 40 weight percent. The chill roll temperature was 6° C. The overall film thickness was 2.14 mil (0.054 mm). The film was then exposed to an electron beam radiation dose of 10 Mrad. Comparative Example C22 was prepared the same as Example 31, but was not irradiated. Oxygen permeability of both samples and free radical concentration of the irradiated sample was measured periodically and the resulting data is summarized in Tables 29 and 30.

TABLE 29

| Aging time (days) | | Oxygen Permeability (cc-mil/m²-day-atm) | |
|---|---|---|---|
| | Example: | 31 | C22 |
| 3 | | 0 | 0.765 |
| 8 | | 0 | |
| 10 | | 0 | |
| 19 | | 0 | |
| 21 | | 0 | |
| 26 | | 0 | |
| 30 | | 0.012 | |
| 39 | | 0 | |
| 47 | | 0 | |
| 54 | | 0 | |

TABLE 30

| Aging time (days) | | Free Radical Concentration (spins/g) |
|---|---|---|
| | Example: | 31 |
| 0 | | $1.90 \times 10^{18}$ |
| 0.01 | | $1.86 \times 10^{18}$ |
| 0.03 | | $1.81 \times 10^{18}$ |
| 0.08 | | $1.69 \times 10^{18}$ |
| 0.13 | | $1.64 \times 10^{18}$ |
| 0.17 | | $1.60 \times 10^{18}$ |
| 0.42 | | $1.46 \times 10^{18}$ |
| 1.08 | | $1.25 \times 10^{18}$ |
| 2.08 | | $1.13 \times 10^{18}$ |
| 6.08 | | $8.97 \times 10^{17}$ |
| 9.08 | | $7.74 \times 10^{17}$ |
| 13.08 | | $6.33 \times 10^{17}$ |
| 17.08 | | $5.56 \times 10^{17}$ |
| 29.08 | | $3.17 \times 10^{17}$ |
| 36.08 | | $2.46 \times 10^{17}$ |
| 43.08 | | $2.18 \times 10^{17}$ |

As can be seen from the data in Table 29, the oxygen permeability in the irradiated sample dropped to essentially zero immediately upon irradiation and remained at essentially zero for at least 54 days after treatment. Correspondingly, as can be seen from the data in Table 30, the free radical concentration decreased monotonically from $1.9 \times 10^{18}$ spins/g immediately after irradiation, to $3.17 \times 10^{17}$ spins/g 29

days after irradiation.

Examples 32-39 and Comparative Examples C23 and C24

In Examples 32-35, samples of Eval™ EF-F film (about 12.5 cm long, 12.5 cm wide, and 0.015 mm thick) were exposed to electron beam radiation at the dosages of 0.5 Mrad, 2 Mrad, 5 Mrad, and 10 Mrad, respectively. Each sample was wrinkled as tightly as possible by hand. In Comparative Example C23, a sample of Eval™ EF-F was not exposed to radiation but was wrinkled. The oxygen permeability of each sample was measured at the storage times indicated in Table 31. The results are set forth in Table 31.

In Examples 36-39 and Comparative Example 24, samples of Eval™ EF-XL film were treated and tested as in Examples 32-35 and Comparative Example C23, respectively. The results are set forth in Table 31.

Table 31

| Example | | Oxygen permeability (cc-mil/m$^2$-day-atm) | | | | | | | |
|---|---|---|---|---|---|---|---|---|---|
| | Days: | 2.3 | 9.3 | 16.3 | 24 | 32 | 46 | 53 | 63 |
| C23 | | 0.20 | 0.18 | 0.20 | 0.19 | 0.18 | 0.18 | 0.20 | 0.20 |
| 32 | | 0 | 0 | 0 | 0 | 0 | 0.14 | 0.20 | 0.21 |
| 33 | | 0.02 | 0.02 | 0.04 | 0.03 | 0.02 | 0.03 | 0.03 | 0.06 |
| 34 | | 0 | 0 | 0 | 0 | 0 | 0 | 0 | 0 |
| 35 | | 0 | 0 | 0 | 0 | 0 | 0 | 0 | 0 |
| C24 | | 0.35 | 0.33 | 0.35 | 0.34 | 0.33 | 0.33 | 0.35 | 0.34 |
| 36 | | 0 | 0 | 0 | 0 | 0 | 0.32 | 0.39 | 0.41 |
| 37 | | 0 | 0 | 0 | 0 | 0 | 0 | 0.02 | 0.29 |
| 38 | | 0 | 0 | 0 | 0 | 0 | 0 | 0 | 0 |
| 39 | | 0 | 0 | 0 | 0 | 0 | 0 | 0 | 0 |

As can be seen from the data in Table 31, the film samples of the invention attained substantially zero oxygen permeability after radiation and maintained such oxygen impermeability for extended periods of time, the time being longer at higher dosages of radiation. The data demonstrates that films of hydrolyzed ethylene-vinyl alcohol do not develop pin holes on wrinkling as does aluminum foil, a commercially available oxygen barrier film.

**Claims**

1. A film comprising hydrolyzed ethylene-vinyl acetate copolymer, said film being irradiated with ionizing radiation in an inert atmosphere at a dosage sufficient to provide a free radical concentration such that said film has an oxygen permeability of substantially zero cc-mil/m$^2$-day-atm.

2. A multi-layer film comprising at least one layer of the film of claim 1 and at least one layer of a second film.

3. The film of claim 2 further comprising an adhesive tie-layer between said film layers.

4. A film according to claim 1 comprising at least about 50 weight percent hydrolyzed ethylene-vinyl acetate copolymer, said copolymer containing at least about 65 mol percent vinyl alcohol, and up to 50 weight percent ethylene-vinyl acetate copolymer, said film being irradiated with sufficient ionizing radiation in an inert atmosphere to achieve a free radical concentration such that said film has an oxygen permeability of substantially zero cc-mil/m$^2$-day-atm.

5. A film comprising at least about 75 weight percent hydrolyzed ethylene-vinyl acetate copolymer, said copolymer containing at least about 50 mol percent vinyl alcohol, and up to about 25 weight percent ethylene-vinyl acetate copolymer, said film being irradiated with ionizing radiation in an inert atmosphere at a dosage of at least about 2 Mrads radiation having an oxygen permeability of less than about 0.2 cc-mil/m$^2$-day-atm.

6. A method of making a film according to claim 1 comprising irradiating a film comprising hydrolyzed ethylene-vinyl acetate copolymer with ionizing radiation in an inert atmosphere at a dosage sufficient to provide a free radical concentration such that the film has an oxygen permeability of substantially zero cc-mil/m$^2$-day-atm.

7. The method of claim 6 wherein said ionizing radiation is electron beam or gamma ray radiation.

8. The method of claim 6 wherein said ionizing radiation is provided at a dosage of about 1 to 40 Mrads.

9. A method of making a film according to claim 4 having low oxygen permeability comprising irradiating a film comprising at least about 50 weight percent hydrolyzed ethylene-vinyl acetate copolymer, said copolymer containing at least about 65 mol percent vinyl alcohol, and up to about 50 weight percent ethylene-vinyl acetate copolymer with sufficient ionizing radiation in an inert atmosphere to provide a film having a free radical concentration such that said film has an oxygen permeability of substantially zero cc-mil/m$^2$-day-atm.

10. A method of making a film according to claim 5 comprising irradiating a film comprising at least about 75 weight percent hydrolyzed ethylene-vinyl acetate copolymer, said copolymer containing at least about 50 mol percent vinyl alcohol, and up to about 25 weight percent ethylene-vinyl acetate polymer with ionizing radiation in an inert atmosphere at a dosage of at least about 2 Mrads radiation to provide a film having an oxygen permeability of less than about 0.2 cc-mil/m$^2$-day-atm.